# EUROPEAN PATENT APPLICATION

(11) **EP 3 974 297 A1**
(43) Date of publication of application: **30.03.2022**
(21) Application number: 21196392.1
(22) Date of filing: 13.09.2021
(51) Int. Cl.: B62D 55/12

(54) **SPROCKET FOR CRAWLER TRACKS**

(30) Priority: 25.09.2020 IT 202000005386 U
(71) Applicant: Romboli, Roberto, 47121 Forlì FC (IT)
(72) Inventor: Romboli, Roberto, 47121 Forlì FC (IT)
(74) Representative: Modiano, Micaela Nadia

(57) **Abstract**

A sprocket (1) for crawler tracks (C) that comprises a disk with external teeth (A1, E1) which is interposed between and is integral with two guide rims (B, F) which are mutually at least partially mirror-symmetrical at at least respective radially external portions (B1-B2, F1-F2).

In the configuration of use, the rims (B, F) come into contact with a respective crawler track (C). The guide rims (B, F) are adapted to rotate synchronously with the disk with external teeth (A1, E1) and, in the configuration of use, abut with a first radially external portion (B1, F1) thereof against a respective internal surface (CI) of the crawler track (C) and, with a second radially external portion (B2, F2), externally flank two corresponding rows of projections (C2) which protrude from the internal surface of the crawler track (C).

## Description

The present invention relates to a sprocket for crawler tracks.

It is well known that crawler tracks, both articulated chain tracks and continuous rubber tracks, are wound around two end wheels of a row (which comprises drive wheels and idle wheels). One of these, being the drive wheel, is toothed and enmeshed in the crawler track, while the other wheel, toothed or otherwise, can be positioned longitudinally until it tensions the lower tread segment of the crawler track, which is kept in adherence to the terrain by a series of intermediate bogies which, idle and fitted with shock absorbers, roll on the internal face of the aforesaid lower tread segment.

A drawback complained of by drivers of tracked vehicles is side derailment, or the accidental release or "throwing" of the crawler track from the sprocket enmeshed in it.

This occurs especially when the unevenness of the terrain forces one of the two crawler tracks to a particularly accentuated transverse inclination with respect to the trim of the vehicle and of the sprockets, and also when the two crawler tracks are forced to assume opposite transverse inclinations that, by counterbalancing each other, do not influence the normal trim of the vehicle and of the sprockets.

In addition, the ineffectiveness is well established of the two rows of guide tabs or projections which are provided inside the crawler tracks (protruding with respect to the internal surface thereof) for the purpose of keeping the track portion currently engaged centered on the sprocket.

The aim of the present invention is to permanently solve the above problem and to prevent the side derailment of crawler tracks in situations even more critical than those described.

Within this aim, an object of the invention is to solve the above problem with a solution that ensures a high reliability of operation.

Another object of the invention is to provide a sprocket that can also be used with crawler tracks of tracked vehicles already in circulation.

Another object of the invention is the ability to provide the sprocket using processing techniques normally in use in any company in the sector.

This aim and these objects are achieved via a sprocket for crawler tracks according to claim 1.

Some possible embodiments of the sprocket for crawler tracks will be described below with reference to the drawings enclosed by way of non-limiting example, in which:
- Figure 1 is a schematic front elevation view of a disk with external teeth adapted for the fixing of two guide rims;
- Figure 2 is a schematic front elevation view of a first embodiment of a sprocket according to the invention;
- Figure 3 is a cross-sectional view taken along the line X-X traced in Figure 2 of a sprocket according to the invention;
- Figure 4 is a schematic front elevation view of the sprocket of Figure 2 enmeshed in a respective crawler track;
- Figure 5 is a cross-sectional view taken along the line Y-Y traced in Figure 4 of a sprocket according to the invention enmeshed in a respective crawler track;
- Figure 6 is a schematic front elevation view_of a second embodiment of a sprocket according to the invention;
- Figure 7 is a cross-sectional view taken along the line Z-Z traced in Figure 6 of a sprocket according to the invention;
- Figure 8 is a cross-sectional view taken along the line Z-Z traced in Figure 6 of a sprocket according to the invention on which the respective crawler track is also shown.

With reference to the drawings, and differently from all the sprockets known and used in the prior art as drive wheels of tracked vehicles, the sprocket 1 according to the invention, which is designed to prevent the side derailment of crawler tracks C, is constituted substantially by a disk with external teeth A which is flanked, on both sides, by two guide rims B to which it is rigidly connected or with which it is in any case integral.

In particular the two guide rims B, which are mutually mirror-symmetrical at least in the angular profile in contact with the crawler track C, abut with the portions B1 against the internal surface C1 of the crawler track, while the portions B2 externally flank the two rows of protruding projections C2 of the crawler track C in the portion thereof currently engaged in the teeth A1 of the disk with external teeth A.

According to the invention, the crawler track C, which in the prior art has been kept precariously in line with the sprocket only by its own protruding projections C2, which are prone to yield laterally during side inclinations of the wheel itself thus causing the consequent side derailment of the crawler track, can be kept stably in line by the portions B1 and B2 of each one of the two guide rims B which are integral with the disk with external teeth A which is interposed between those rims B.

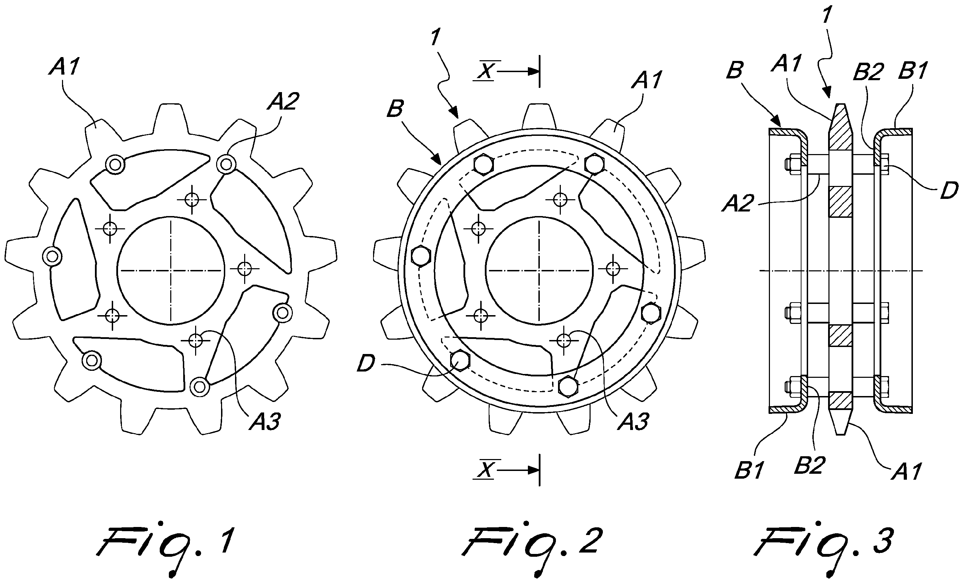

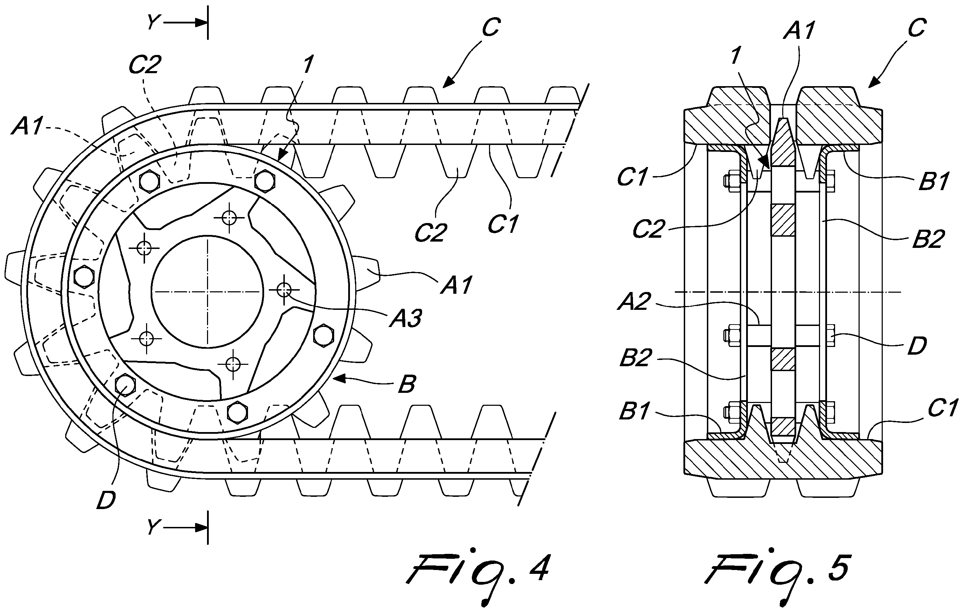

Furthermore, according to the embodiment shown in Figures 1, 2, 3, 4 and 5, perforated projections A2 protrude from the two faces of the disk with external teeth A and space the guide rims B apart from these teeth.

The guide rims B are fixed on these projections A2 using welding or using bolts D which pass through holes provided in portions B2 of the guide rims B at the above mentioned perforated projections A2.

An additional set of holes, designated with A3 in the accompanying figures, is designed to accommodate respective bolts (in particular captive bolts) or for other means of connecting the sprocket to a respective drive element.

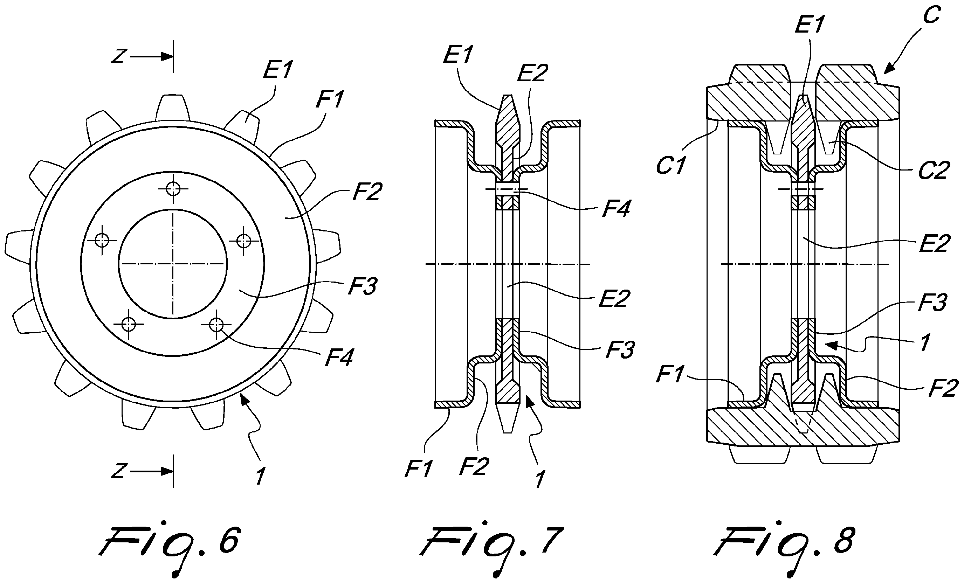

The embodiment of Figures 6, 7 and 8 differs from the one just described because the two mutually mirror-symmetrical guide rims F have, in the region passed through by through holes F4 designed for the means of connection to the respective drive element, a portion of minimum transverse space occupation F3 (this portion F3 is flat and, with respect to the other parts of the guide rim F that comprises it, has a lower transverse thickness and therefore is recessed with respect to those other parts).

The portion F3 can therefore be juxtaposed, i.e. placed face to face, with a central portion E2 of the sprocket E, which is also perforated, at the holes F4.

The central portion F3 can be coupled to the guide rims F using welds or with the same bolts that will rigidly connect the three elements to the respective drive element.

The portion F3 (which has low transverse thickness and therefore is recessed with respect to the other portions) makes it possible to obtain that spacing, in the outermost region of the two guide rims F, from the disk with external teeth E which is interposed between these rims F in the configuration of use.

By virtue of this spacing the portions F2 can externally flank the two rows of projections C2 which protrude inside the crawler track C in the portion where its internal surface C1 abuts against the portion F1 of the two guide rims F.

More in detail, it should be noted that the sprocket 1 according to the invention will advantageously comprise a disk with external teeth A, E which is interposed between and is integral with two guide rims B, F which are mutually at least partially mirror-symmetrical at at least respective radially external portions B1-B2, F1-F2 which, in the configuration of use, will come into contact with a respective crawler track C.

The guide rims B, F will conveniently be adapted to rotate synchronously with the disk with external teeth A1, E1 and, in the configuration of use, will abut with a first radially external portion B1, F1 thereof against a respective internal surface C1 of the crawler track C and, with a second radially external portion B2, F2, will profitably externally flank two corresponding rows of projections C2 which protrude from the internal surface of the crawler track C.

With particular reference to the embodiment shown by way of non-limiting example in the accompanying Figures 1, 2, 3, 4 and 5, both of the faces of the disk with external teeth A1 can conveniently comprise perforated projections A2 which protrude transversely for spacing the guide rims B apart from the disk A.

The perforated projections A2 ensure that the guide rims B are kept at a preset distance from the guide rims B.

The guide rims B will positively be fixed to the perforated spacing projections A2 with a technique chosen from either welding or bolting of threaded means D that pass through the holes provided on the projections A2: the fixing will occur at the portions B2 of the guide rims B.

With particular reference to an alternative embodiment, shown by way of non-limiting example in the accompanying Figures 6, 7 and 8, the two guide rims F, at a central zone thereof can profitably comprise elements chosen among holes F4 for screw clamping means (which can be constituted by captive bolts) or other means of connection of the disk with external teeth (E1) to a respective drive element.

The guide rims F, in this case, both have a portion F3 of minimum thickness, the surfaces of which, in the configuration of use, are recessed with respect to the surfaces of the other portions F1, F2 of the guide rim F.

The portion F3, in the configuration of use, will positively be juxtaposed, face to face, with a central portion E2 of the disk with external teeth E interposed between the two mirror-symmetrical guide rims F.

The disk E will also be perforated and coupled to the guide rims F using a technique chosen between welding or bolting using the same screw means that rigidly connect such assembly with the respective drive element.

It should be noted that the indentation, with respect to the outermost portions F1, F2, of the central portion F3 in the two guide rims F is such as to allow the placing face to face, i.e. the juxtaposition, of the central portion F3 with the central portion E2 of the disk with external teeth E.

The external edge provided with the teeth E1 of the disk E is interposed between and spaced apart from the outermost portions F1, F2 of each guide rim F.

The portions F1, F2 will usefully be adapted to prevent the lateral egress, known as side derailment, of the crawler track C by virtue of the respective abutment on the internal surface C1 of the crawler track C of the first portions F1 and by virtue of the flanking and delimitation of the protruding projections C2 of the second portions F2.

Advantageously the present invention permanently solves the problem previously described, by preventing the side derailment of crawler tracks C in situations even more critical than those described in the initial part of this description.

Conveniently the sprocket 1 according to the invention ensures a high reliability of operation.

Positively the sprocket 1 according to the invention can also be used with crawler tracks of tracked vehicles already in circulation.

Profitably the sprocket 1 according to the invention can be produced by adopting processing techniques normally in use in any company in the sector.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Utility Model Application No. 202020000005386 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sprocket for crawler tracks (C), **characterized in that** it comprises a disk with external teeth (A1, E1) which is interposed between and is integral with two guide rims (B, F) which are mutually at least partially mirror-symmetrical at at least respective radially external portions (B1-B2, F1-F2) which, in the configuration of use, come into contact with a respective crawler track (C), said guide rims (B, F) being adapted to rotate synchronously with said disk with external teeth (A1, E1) and, in a configuration of use, abutting with a first radially external portion (B1, F1) thereof against a respective internal surface (C1) of the crawler track (C) and, with a second radially external portion (B2, F2), externally flanking two corresponding rows of projections (C2) which protrude from an internal surface of the crawler track (C).

2. The sprocket according to claim 1, **characterized in that** on both sides of said disk with external teeth (A1) perforated spacing projections (A2) protrude in order to maintain said guide rims (B) at a preset distance, said guide rims (B) being fixed to said perforated spacing projections (A2) with a technique chosen among either welding or bolting of screw means (D) that pass through holes provided on said projections (A2), at said portions (B2) of the guide rims (B).

3. The sprocket according to claim 1, **characterized in that** the two guide rims (F), at a central zone thereof which comprises elements chosen from holes (F4) for screw clamping means or other means of connection of said disk with external teeth (E1) to a respective drive element, both have a portion (F3) of minimum thickness, the surfaces of which, in the configuration of use, are recessed with respect to the surfaces of the other portions (F1, F2) of said guide rim (F), said portion (F3), in the configuration of use, being juxtaposed, face to face, with a central portion (E2) of said disk with external teeth (E1) interposed between the two mirror-symmetrical guide rims (F), said disk (E) also being perforated and coupled to the guide rims (F) by way of a technique chosen among welding or bolting using the same screw means that rigidly connect such assembly to the respective drive element.

4. The sprocket according to claim 3, **characterized in that** the indentation, with respect to the outermost portions (F1, F2), of the central portion (F3) in the two guide rims (F) is such as to allow the placing face to face, i.e. the juxtaposition, of said central portion (F3) with said central portion (E2) of said disk with external teeth (E1).

5. The sprocket according to claim 4, **characterized in that** the external edge provided with said teeth (E1) is interposed between and spaced apart from the outermost portions (F1, F2) of each guide rim (F), said portions (F1, F2) being adapted to prevent the lateral egress, known as side derailment, of the crawler track (C) by virtue of the respective abutment on the internal surface (C1) of the crawler track (C) of the first portions (F1) and by virtue of the flanking and delimitation of the protruding projections (C2) of the second portions (F2).
